# EUROPEAN PATENT SPECIFICATION

(11) **EP 1 894 383 B1**
(45) Date of publication and mention of the grant of the patent: **24.10.2012**
(21) Application number: 06754106.0
(22) Date of filing: 02.06.2006
(51) Int. Cl.: H04L 29/06, H04L 12/24, H04L 9/32

(54) **METHOD AND DEVICES FOR SECURE MEASUREMENTS OF TIME-BASED DISTANCE BETWEEN TWO DEVICES**
VERFAHREN UND VORRICHTUNGEN ZUR SICHEREN MESSUNG DER ZEITBASIERTEN DISTANZ ZWISCHEN ZWEI VORRICHTUNGEN
PROCEDE ET DISPOSITIFS POUR MESURES SECURISEES D'UNE DISTANCE BASEE SUR LE TEMPS ENTRE DEUX DISPOSITIFS

(30) Priority: 20.06.2005 EP 05300494
(43) Date of publication of application: 05.03.2008
(73) Proprietor: Thomson Licensing, 92130 Issy-les-Moulineaux (FR)
(72) Inventor: COURTAY, Olivier, F-35000 Rennes (FR); KARROUMI, Mohamed, F-35000 Rennes (FR); DURAND, Alain, F-35000 Rennes (FR)
(74) Representative: Ståhl, Björn Niclas
(86) International application number: PCT/EP2006/005319
(87) International publication number: WO 2006/136278

(56) References cited:
- WO-A-01/93434
- WO-A-2004/014037

## Description

### FIELD OF THE INVENTION

The present invention relates generally to communication networks, and in particular to security in such networks.

### BACKGROUND OF THE INVENTION

Time-based distance is often used in the network field and is measured as the duration of a packet transmission between two devices. A standard Internet protocol, Internet Control Message Protocol (RFC 792; http://www.ietf.org/rfc/rfc792.txt), exists and permits the computation of a distance in milliseconds between two hosts. The associated command is called "ping" and the time-base distance is named Round Trip Time (RTT). This time-based distance is for instance used to decide whether two devices are in a local proximity.

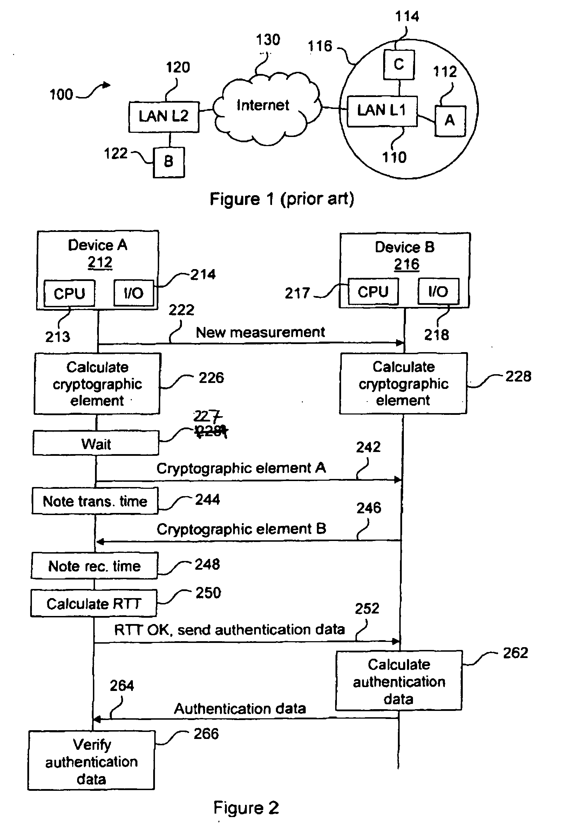

Figure 1 illustrates the concept of local proximity in a network 100. The network 100 comprises two Local Area Networks (LANs), LAN L1 110 and LAN L2 120, interconnected by the Internet 130. LAN L1 110 comprises device A 112 and device C 114, both within a circle 116 that illustrates local proximity, i.e. devices within the circle are considered close to a reference point, in this case device A. LAN L2 120 comprises device B 122, which is located outside of the circle 116, which means that it is not considered close to device A.

In the prior art, a usual method for device A to determine if device B is in its close proximity is based on time-based duration. Device A sends a series of ping commands to device B and measures the associated RTTs. As soon as device A obtains a RTT lower than a given limit (e.g. 7ms), it considers that device B is in its local proximity. If not, after a number - typically 50 or 100 - of RTTs greater than this limit, it considers that device B is not in its local proximity.

Other methods exist where device A does not directly determine whether device B is near to it or not. For instance, device A may send messages to the device such that only devices in its local proximity receive it. A typical method is to send messages with a low Time-To-Live (TTL). These messages can only pass through a limited number (namely TTL) network nodes.

However, the "ping" solution provides a low level of security. Device A has no means to ensure that the response to its ping command comes from device B and thus that the time-distance it measures relates to B. An attacker (located in LAN L1) can block all pings to devices outside LAN L1 and answer on their behalf. A would then consider that all those devices are in its local proximity. This failure is due to the lack of security in the prior art.

A basic solution to that problem would be to authenticate ping responses using standard cryptographic means: device A sends a challenge (in its ping command to device B) and waits for the response. When receiving it, it can check that only device B could have computed the response. For example, device A can send a random number to device B and device B authenticates it e.g. by signing it. Device A then verifies the authentication code. In a second example, device A encrypts a challenge and sends it to device B that replies with the decrypted challenge.

To prove that the ping response originates from it, device B has to perform cryptographic computations before answering device A. The time necessary for the computations may vary from one device to another and be very important on low-resource devices. The computation time may lead A to consider that low-resource devices are not in its local proximity, when this on the contrary is the case. This is clearly not always desirable. Naturally, device A could increase the limit so that low-resource devices have the time to perform the calculations and respond. However, doing so would often mean that high-resources devices outside the local proximity will be regarded as being inside, which usually is undesirable.

WO 2004/014037 describes a method for secure authenticated distance measurement between a first and a second device. The first device authenticates the second device, exchanges a secret with it, and transmits a signal for distance measurement to it. The second device then modifies the received signal according to the secret and returns the modified signal. Upon reception of the modified signal, the first device measures the roundtrip time and verifies that the received signal was modified according to the exchanged secret. As will be appreciated, WO 2004/014037 may be seen as an implementation of the basic solution hereinbefore and suffers from at least some of its drawbacks.

It can therefore be appreciated that there is a need for a method of calculating time based distance that is secure and independent of the resources of devices. This invention provides such a method.

### SUMMARY OF THE INVENTION

The invention is defined by the independent claims.

In a first aspect, the invention is directed to a method of secure calculation at a first device of time based distance to a second device in a network. The first device sends a first message to the second device and receives a second message in response, and calculates the time distance based on the time of transmission of the first message and the time of reception of the second message. The first device also receives a further message that comprises authentication data cryptographically linked to least the first message or at least the second message or at least the first message and the second message, and verifies the authentication data.

In a preferred embodiment, the first device further sends a message to request the further message comprising authentication data if the calculated time based distance is below a predetermined limit.

In a further preferred embodiment, the first message comprises a first cryptographic element and the second message comprises a second cryptographic element, and the authentication data is calculated based on the first and the second cryptographic elements.

It is advantageous that the cryptographic elements are random numbers and the authentication data is a result of a function calculated using the random numbers, the function being dependent on a secret. It is also advantageous that the first device sends a fourth message to the second device to let it know that the method has been initiated, and generates the first cryptographic element. It is further advantageous that the first device waits a predetermined time so as to give the second device time to finish the generation of the second cryptographic element.

In an alternative embodiment, the first device calculates authentication data, and wherein the message, sent to the second device to request the further message comprising authentication data of the second device, comprises the authentication data of the first device.

In a further preferred embodiment, the first device further validates the calculation of the time based distance to the second device upon successful verification of the authentication data.

In a second aspect, the invention is directed to a method of responding at a second device in a network to a protocol for secure calculation at a first device of time based distance to the second device. The second device receives, from the first device, a first message requesting a response for time based distance calculation. In response to the first message, it sends a second message. The second device then calculates authentication data, cryptographically linked to one of: at least the first message, at least the second message, and at least the first message and the second message, and sends, to the first device, a third message comprising the authentication data.

In a third aspect, the invention is directed to a first device adapted for secure calculation of time based distance to a second device in a network. The first device comprises an input/output unit adapted to send a first message to the second device and receive from the second device a second message sent in response to the first message. The first device further comprises a processor adapted to calculate the time distance based on the time of transmission of the first message and the time of reception of the second message. The input/output unit is further adapted to receive a further message comprising authentication data cryptographically linked to one of: at least the first message, at least the second message, and at least the first message and the second message, and the processor is further adapted to verify the authentication data.

In a preferred embodiment, the input/output unit is further adapted to send a message to request the further message comprising authentication data only if the calculated time based distance is below a predetermined limit.

It may be advantageous that the processor is further adapted to calculate authentication data of the first device, and the input/output unit is further adapted to include the authentication data of the first device in the message sent to the second device to request the further message comprising authentication data of the second device.

In a further preferred embodiment, the processor is further adapted to generate a first cryptographic element and to verify the authentication data, cryptographically linked by being based on the first cryptographic element and a second cryptographic element, and the input/output unit is further adapted to include the first cryptographic element in the first message, and to receive the second cryptographic element in the second message.

In a fourth aspect, the invention is directed to a second device in a network adapted to respond to a protocol, launched at a first device, for secure calculation of time based distance to the second device. The second device comprises a processor adapted to calculate authentication data, cryptographically linked to one of: at least a first message, at least the second message, and at least the first message and the second message, and an input/output unit adapted to receive, from the first device, the first message, in response to the first message, send the second message to the first device, and send, to the first device, a third message comprising the authentication data.

In a preferred embodiment, the input/output unit is further adapted to receive a message from the first device, the message comprising authentication data calculated by the first device. The processor is further adapted to verify the received authentication data and calculate its own authentication data only if the received authentication data is successfully verified.

### BRIEF DESCRIPTION OF THE DRAWINGS

Preferred features of the present invention will now be described, by way of example, with reference to the accompanying drawings, in which:
Figure 1, discussed hereinbefore, is an illustration of a network and the concept of local proximity;
Figure 2 illustrates a flow chart of a preferred embodiment of the method according to the invention;
Figure 3 illustrates a flow chart of an alternative embodiment of the method according to the invention; and
Figure 4 illustrates a flow chart of a further alternative embodiment of the method according to the invention.

### DETAILED DESCRIPTION OF PREFERRED EMBODIMENTS

Figure 2 illustrates a flow chart of a preferred embodiment of the method according to the invention. The method has three general phases:
1. A pre-computation phase in which the method is initiated and first cryptographic computations are made.
2. A phase of time-based measurement of the distance between two devices, exchanging results of the pre-computation phase in a "ping"-like command.
3. A cryptographic verification phase, in which additional authentication data, cryptographically linked to the results exchanged in the "ping" messages, are computed and exchanged, as needed, and authentication is verified. In other words, it is verified that the sender of the response to the "ping" command is the sender of the authentication data, and the identity of the answering device is further verified.

In the description hereinafter, it is assumed that device A 212 requires a secure measurement of the RTT to device B 216. in other words, device A launches the protocol and device B responds to it.

In one embodiment, device A and device B each has a X.509 certificate, certified by a common trusted entity, and an associated RSA private key. Before the start of the method, each device has knowledge of the certificate and the public key of the other device. A preferred embodiment, however, is described hereinafter.

Device A 212 comprises a processor 213 for calculations and an input/output unit 214 for communication. Device B 216 also comprises a processor 217 for calculations and an input/output unit 218 for communication.

The pre-computation phase begins when device A 212 sends a new measurement message 222 to device B 216. The message 222 indicates that device A wishes to make a new RTT measurement. Upon reception of this message 222, device B computes 224 a cryptographic element, preferably a random number (Random_B) that is new for each computation. Device A calculates 226 an independent cryptographic element, preferably a random number (Random_A) that is new for each computation, and waits 227 a predetermined time to give device B the time necessary for the computation. In a preferred embodiment, device A knows the maximum time necessary for B's computation, but it is also possible to use a predetermined, general time value, e.g. if the maximum time is unknown to device A.

The measurement phase begins when device A sends a message 242 comprising its cryptographic element to device B, and also notes 244 the time of transmission. Upon reception of A's message 242, device B responds with a message 246 comprising its cryptographic element. Device A receives the message 246 and notes 248 the time of reception. With the time of transmission and the time of reception, device A then calculates 250 the RTT to device B. It should be noted, however, that at this point, device A has no means of knowing that the message 246 purportedly from device B in fact came from that device.

In a preferred embodiment, when calculating 250 the RTT, device A also verifies if the RTT is below the given limit, i.e. if device B is in the local proximity. If this is not the case, i.e. if device B is not close, then there is no point in verifying that device B was the sender of message 246 and the method either stops or recommences - it has been mentioned hereinbefore that it is common to send a series of up to 50 or 100 ping messages to calculate the RTT to a device and stop as soon as one RTT is below a certain value. It is also possible for device A to restart the method without having received a response from device B, if the limit has been exceeded. However, if device A considers that device B is in the local proximity, then requires authentication data by sending a message 252 that indicates that the RTT is good, but that authentication data is needed. In an alternative embodiment, no "RTT is good" message 252 is sent and the rest of the method is performed automatically.

The cryptographic verification phase then begins when device B, either automatically or in response to the "RTT is good" message 252, then calculates 262 the required authentication data - cryptographically linked to the "ping" messages 242, 246, in this case based on both A's and B's cryptographic elements - that it was the sender of the message 246 it sent to device A. The authentication data is preferably a concatenation of the two cryptographic elements signed with device B's private key. The preferred way of calculating the proof uses public key cryptography, but other ways, such as e.g. using secret key cryptography, are also possible. Device B then sends a message 264 comprising the authentication data to device A. In a preferred embodiment, the authentication data message 264 further comprises the certificate of device B.

Upon reception of this message 264, device A verifies 266 the authentication data. A successful verification means that the message 246 from device B indeed came from device B in response to the message 242 sent to it by device A. The verification is preferably performed by verifying that device B's certificate is a compliant certificate, i.e. by verifying the X.509 chain of trust; decrypting the signature; and checking that the result matches the concatenation of the cryptographic elements, Random_A and Random_B. Upon successful verification, device A validates the calculation of the time based distance to device B. Device A is now assured that it pinged device B and, if the RTT is good; that device B is in its local proximity.

Consider Figure 1 where device B is not close to device A, and where an attacker C (located in LAN L1) is able to block all pings to devices outside LAN L1 and answer on their behalf. When device A uses the present invention, device C has no means of calculating B's authentication data, since he does not possess B's private key. Device C could obtain authentication data from device B beforehand by launching the protocol, passing himself off as device A. But, it this case, C would have to predict the cryptographic element generated by A, which is not possible. Else, the authentication data obtained from device B will not be valid if device C sends it to device A, which then will consider that B device is not in its local proximity. The method according to the invention is thus more secure than the prior art methods.

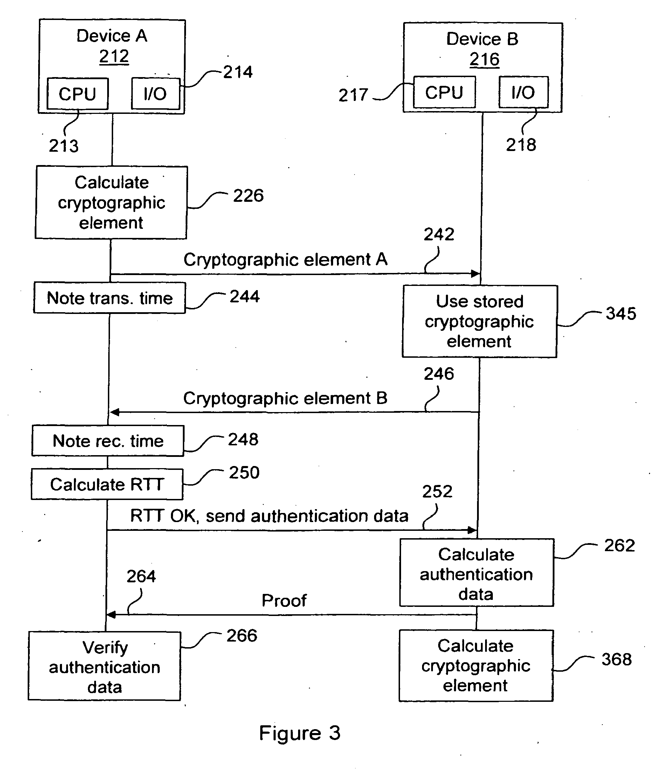

Figure 3 illustrates a flow chart of an alternative embodiment of the method according to the invention. The embodiment illustrated in Figure 3 is similar to the preferred embodiment, and the same steps will be denoted by the same reference numbers.

Before the method starts, device B has calculated and stores at least one cryptographic element, preferably a random number.

Device A starts the method by calculating 226 a cryptographic element, which is sent to device B in message 242. Device A also notes 244 the time of transmission. Upon reception of the message 242, device B uses 345 its stored cryptographic element and sends it in a message 246 to device A. Device A notes 248 the time of reception and calculates 250 the Round Trip Time (RTT).

If the RTT is below a certain threshold, device A sends a message 252 to device B to let it know that the RTT is acceptable and that it requires authentication data. Device B then calculates the authentication data as described hereinbefore and sends the authentication data to device A in message 264. Device A then verifies 266 the authentication data, and thereby the origin of the received "ping" message 246 the identity of device B.

After having sent the message 264 comprising the authentication data, if device B only had one cryptographic element stored, it calculates 368 a new cryptographic element.

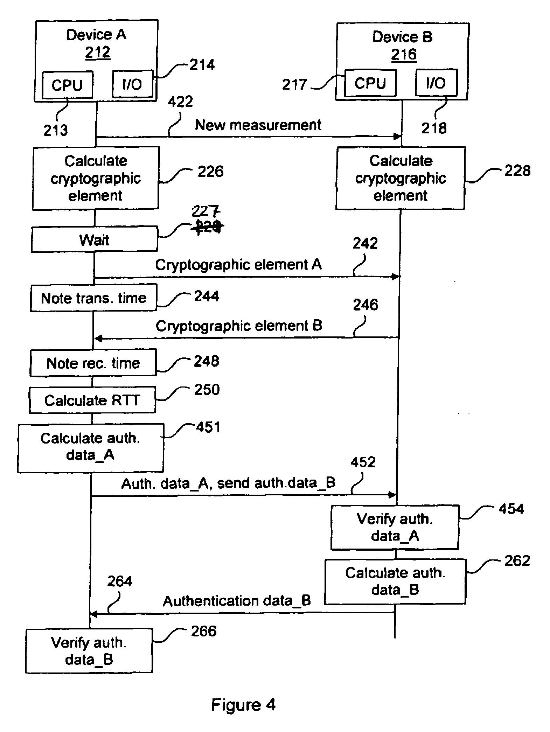

Figure 4 illustrates a flow chart of a further alternative embodiment of the method according to the invention. The embodiment illustrated in Figure 4 is similar to the preferred embodiment, and the same steps will be denoted by the same reference numbers.

Device A starts the method by sending to device B a new measurement message 422, preferably comprising the certificate of device A. Device A and device B calculate 226, 228 a cryptographic element each, and device A waits 227 to give B the time to finish the calculation.

Device A sends a message 242 comprising its cryptographic element to device B and notes 244 the time of transmission. Upon reception of the message 242, device B uses its calculated cryptographic element and sends it in a message 246 to device A. Device A notes 248 the time of reception and calculates 250 the Round Trip Time (RTT).

If the RTT is below a certain threshold, device A calculates 451 authentication data (auth. data_A) to prove its identity and sends to device B a message 452 comprising the authentication data. The message 452 also lets device B know that the RTT is acceptable and that device A requires authentication data (auth. data_B) from device B. Upon reception of the message 452, device B then verifies 454 the authentication data received from device A, which means that the message 242 from device A indeed came from device A. If device B is assured that it was pinged by device A, it calculates 262 the required authentication data as described hereinbefore and sends the authentication data to device A in message 264. Device A then verifies 266 the authentication data, and thereby the origin of the "ping" response 246 and the identity of device B.

This invention can for example be used in video diffusion on a network to ensure that only device in local proximity of a source receive the video.

It can thus be appreciated that the present invention improves upon the prior art by providing a method of calculating time based distance that is secure and independent of the resources of devices.

It will be understood that the present invention has been described purely by way of example, and modifications of detail can be made without departing from the scope of the invention.

Each feature disclosed in the description and (where appropriate) the claims and drawings may be provided independently or in any appropriate combination. Features may, where appropriate be implemented in hardware, software, or a combination of the two. Connections may, where applicable, be implemented as wireless connections or wired, not necessarily direct or dedicated, connections.

Reference numerals appearing in the claims are by way of illustration only and shall have no limiting effect on the scope of the claims.

## Claims

1. A method of secure calculation at a first device (212) of time based distance to a second device (216) in a network (100), comprising the steps of:
sending a first message (242) to the second device;
receiving from the second device a second message (246) sent in response to the first message;
calculating (244; 248; 250) the time distance based on the time of transmission of the first message and the time of reception of the second message;
**characterised by** the subsequent steps of:
receiving a subsequent message (264) comprising authentication data cryptographically linked to one of: at least the first message (242), at least the second message (246), and at least the first message (242) and the second message (246); and
verifying (266) the authentication data.

2. The method of claim 1, further comprising the step of sending a message (252) to request the further message (264) comprising authentication data if the calculated time based distance is below a predetermined limit.

3. The method of claim 1 or 2, wherein the first message (242) comprises a first cryptographic element and the second message (246) comprises a second cryptographic element, and the authentication data is calculated based on the first and the second cryptographic elements.

4. The method of claim 3, wherein the cryptographic elements are random numbers and the authentication data is a result of a function calculated using the random numbers, the function being dependent on a secret.

5. The method of claim 3, further comprising the steps of:
sending a fourth message (222) to the second device to let it know that the method has been initiated;
generating (226) the first cryptographic element.

6. The method of claim 5, further comprising the step of waiting (228) a predetermined time so as to give the second device time to finish the generation of the second cryptographic element.

7. The method of claim 2, wherein the authentication data is second authentication data, the method further comprising the step of calculating (451) first authentication data , and wherein the message (252), sent to the second device to request the further message (264) comprising second authentication data, comprises the first authentication data.

8. The method of claim 1, further comprising the step of validating the calculation of the time based distance to the second device upon successful verification of the authentication data.

9. A method of responding at a second device (216) in a network (100) to a protocol for secure calculation at a first device (212) of time based distance to the second device, comprising the steps of:
receiving, from the first device, a first message (242) whose time of transmission is used by the first device for the calculation of the time based distance;
in response to the first message, sending to the first device, a second message (246), whose time of reception is used by the first device for the calculation of the time based distance;
calculating (262) authentication data, cryptographically linked to one of: at least the first message (242), at least the second message (246), and at least the first message (242) and the second message (246); and
sending, to the first device, a subsequent message (264) comprising the authentication data.

10. A first device (212) adapted for secure calculation of time based distance to a second device (216) in a network (100), the first device comprising:
an input/output unit (214) adapted to:
send a first message (242) to the second device; and
receive from the second device a second message (246) sent in response to the first message (242); and
a processor (213) adapted to:
calculate the time distance based on the time of transmission of the first message and the time of reception of the second message;
**characterised in that**:
the input/output unit further is adapted to receive a subsequent message (264) comprising authentication data, the authentication data being cryptographically linked to one of: at least the first message (242), at least the second message (246), and at least the first message (242) and the second message (246); and
the processor further is adapted to verify the authentication data.

11. The device of claim 10, wherein the input/output unit (214) is further adapted to send a message (252) to request authentication data only if the calculated time based distance is below a predetermined limit.

12. The device of claim 10 or 11, wherein the processor (213) is further adapted to calculate first authentication data , and wherein the input/output unit (214) is further adapted include the first authentication data in the message (252) sent to the second device to request authentication data, which is second authentication data.

13. The device of claim 10, wherein:
the processor is further adapted to:
generate a first cryptographic element; and
verify the received authentication data, the authentication data being cryptographically linked by being based on the first cryptographic element and a second cryptographic element; and
the input/output unit is further adapted to:
include the first cryptographic element in the first message (242); and
receive the second cryptographic element in the second message (246).

14. A second device (216) in a network (100) adapted to respond to a protocol, launched at a first device (212), for secure calculation of time based distance to the second device, the second device comprising:
a processor (217) adapted to:
calculate authentication data, cryptographically linked to one of: at least a first message (242), at least a second message (246), and at least the first message (242) and the second message (246); and
an input/output unit (218) adapted to:
receive, from the first device, the first message (242) whose time of transmission is used by the first device for the calculation of the time based distance;
in response to the message, send to the first device, the second message (246) whose time of reception is used by the first device for the calculation of the time based distance; and
send, to the first device, a subsequent message (264) comprising the authentication data.

15. The device of claim 14, wherein the input/output unit (218) is further adapted to receive a message (452) from the first device, the message comprising authentication data calculated by the first device, and the processor (217) is further adapted to verify the received authentication data and calculate its own authentication data only if the received authentication data is successfully verified.

## Patentansprüche

1. Verfahren zur sicheren Berechnung einer zeitbasierten Distanz zu einer zweiten Vorrichtung (216) bei einer ersten Vorrichtung (212) in einem Netz (100), wobei das Verfahren die folgenden Schritte umfasst:
Senden einer ersten Nachricht (242) an die zweite Vorrichtung;
Empfangen einer zweiten Nachricht (246), die in Reaktion auf die erste Nachricht gesendet wurde, von der zweiten Vorrichtung;
Berechnen (244; 248; 250) der Zeitdistanz auf der Grundlage des Zeitpunkts der Sendung der ersten Nachricht und des Zeitpunkts des Empfangs der zweiten Nachricht;
**gekennzeichnet durch** die folgenden Schritte:
Empfangen einer nachfolgenden Nachricht (264), die Authentisierungsdaten umfasst, die mit einem der Folgenden kryptographisch verknüpft sind: mindestens der ersten Nachricht (242), mindestens der zweiten Nachricht (246) und mindestens der ersten Nachricht (242) und der zweiten Nachricht (246); und
Verifizieren (266) der Authentisierungsdaten.

2. Verfahren nach Anspruch 1, das ferner den Schritt des Sendens einer Nachricht (252) zum Anfordern der weiteren Nachricht (264), die Authentisierungsdaten umfasst, umfasst, falls die berechnete zeitbasierte Distanz unter einem vorgegebenen Grenzwert liegt.

3. Verfahren nach Anspruch 1 oder 2, bei dem die erste Nachricht (242) ein erstes kryptographisches Element umfasst und die zweite Nachricht (246) ein zweites kryptographisches Element umfasst und die Authentisierungsdaten auf der Grundlage des ersten und des zweiten kryptographischen Elements berechnet werden.

4. Verfahren nach Anspruch 3, bei dem die kryptographischen Elemente Zufallszahlen sind und die Authentisierungsdaten ein Ergebnis einer unter Verwendung der Zufallszahlen berechneten Funktion sind, wobei die Funktion von einem Geheimnis abhängt.

5. Verfahren nach Anspruch 3, das ferner die folgenden Schritte umfasst:
Senden einer vierten Nachricht (222) an die zweite Vorrichtung, um sie darüber in Kenntnis zu setzen, dass das Verfahren initiiert worden ist;
Erzeugen (226) des ersten kryptographischen Elements.

6. Verfahren nach Anspruch 5, das ferner den Schritt, eine vorgegebene Zeitdauer zu warten (228), um der zweiten Vorrichtung Zeit zu geben, die Erzeugung des zweiten kryptographischen Elements abzuschließen, umfasst.

7. Verfahren nach Anspruch 2, bei dem die Authentisierungsdaten zweite Authentisierungsdaten sind, wobei das Verfahren ferner den Schritt des Berechnens (451) erster Authentisierungsdaten umfasst und wobei die Nachricht (252), die an die zweite Vorrichtung gesendet wird, um die weitere Nachricht (264) anzufordern, die zweite Authentisierungsdaten umfasst, die ersten Authentisierungsdaten umfasst.

8. Verfahren nach Anspruch 1, das ferner den Schritt des Validierens der Berechnung der zeitbasierten Distanz zu der zweiten Vorrichtung bei erfolgreicher Verifizierung der Authentisierungsdaten umfasst.

9. Verfahren zum Antworten auf ein Protokoll für die sichere Berechnung der zeitbasierten Distanz zu einer zweiten Vorrichtung bei einer ersten Vorrichtung (212), bei der zweiten Vorrichtung (216) in einem Netz (100), wobei das Verfahren die folgenden Schritte umfasst:
Empfangen einer ersten Nachricht (242), deren Zeitpunkt der Sendung von der ersten Vorrichtung für die Berechnung der zeitbasierten Distanz verwendet wird, von der ersten Vorrichtung;
Senden einer zweiten Nachricht (246), deren Zeitpunkt des Empfangs von der ersten Vorrichtung für die Berechnung der zeitbasierten Distanz verwendet wird, an die erste Vorrichtung in Reaktion auf die erste Nachricht;
Berechnen (262) von Authentisierungsdaten, die kryptographisch mit einem der Folgenden verknüpft sind: mindestens der ersten Nachricht (242), mindestens der zweiten Nachricht (246) und mindestens der ersten Nachricht (242) und der zweiten Nachricht (246); und
Senden einer nachfolgenden Nachricht (264), die die Authentisierungsdaten umfasst, an die erste Vorrichtung.

10. Erste Vorrichtung (212), die zur sicheren Berechnung einer zeitbasierten Distanz zu einer zweiten Vorrichtung (216) in einem Netz (100) ausgelegt ist, wobei die erste Vorrichtung umfasst:
eine Eingabe/Ausgabe-Einheit (214), die ausgelegt ist zum:
Senden einer ersten Nachricht (242) an die zweite Vorrichtung; und
Empfangen einer zweiten Nachricht (246), die in Reaktion auf die erste Nachricht (242) gesendet wurde, von der zweiten Vorrichtung; und
einen Prozessor (213), der ausgelegt ist zum:
Berechnen der Zeitdistanz auf der Grundlage des Zeitpunkts der Sendung der ersten Nachricht und des Zeitpunkts des Empfangs der zweiten Nachricht;
**dadurch gekennzeichnet, dass**:
die Eingabe/Ausgabe-Einheit ferner zum Empfangen einer nachfolgenden Nachricht (264), die Authentisierungsdaten umfasst, ausgelegt ist, wobei die Authentisierungsdaten mit einem der Folgenden kryptographisch verknüpft sind:
mindestens der ersten Nachricht (242), mindestens der zweiten Nachricht (246) und mindestens der ersten Nachricht (242) und der zweiten Nachricht (246); und
wobei der Prozessor ferner zum Verifizieren der Authentisierungsdaten ausgelegt ist.

11. Vorrichtung nach Anspruch 10, bei der die Eingabe/Ausgabe-Einheit (214) ferner zum Senden einer Nachricht (252) zum Anfordern von Authentisierungsdaten nur dann, wenn die berechnete zeitbasierte Distanz unter einem vorgegebenen Grenzwert liegt, ausgelegt ist.

12. Vorrichtung nach Anspruch 10 oder 11, bei der der Prozessor (213) ferner zum Berechnen erster Authentisierungsdaten ausgelegt ist und bei der die Eingabe/Ausgabe-Einheit (214) ferner dafür ausgelegt ist, die ersten Authentisierungsdaten in der Nachricht (252) zu enthalten, die an die zweite Vorrichtung gesendet wird, um Authentisierungsdaten anzufordern, die zweite Authentisierungsdaten sind.

13. Vorrichtung nach Anspruch 10, bei der:
der Prozessor ferner ausgelegt ist zum:
Erzeugen eines ersten kryptographischen Elements; und
Verifizieren der empfangenen Authentisierungsdaten, wobei die Authentisierungsdaten dadurch kryptographisch verknüpft sind, dass sie auf dem ersten kryptographischen Element und auf einem zweiten kryptographischen Element beruhen; und
bei der die Eingabe/Ausgabe-Einheit ferner ausgelegt ist zum:
Enthalten des ersten kryptographischen Elements in der ersten Nachricht (242); und
Empfangen des zweiten kryptographischen Elements in der zweiten Nachricht (246).

14. Zweite Vorrichtung (216) in einem Netz (100), die dafür ausgelegt ist, auf ein Protokoll zur sicheren Berechnung der zeitbasierten Distanz zu der zweiten Vorrichtung zu reagieren, das in einer ersten Vorrichtung (212) gestartet wird, wobei die zweite Vorrichtung umfasst:
einen Prozessor (217), der ausgelegt ist zum:
Berechnen von Authentisierungsdaten, die kryptographisch mit einem der Folgenden verknüpft sind: mindestens einer ersten Nachricht (242), mindestens einer zweiten Nachricht (246) und mindestens der ersten Nachricht (242) und der zweiten Nachricht (246); und
eine Eingabe/Ausgabe-Einheit (218), die ausgelegt ist zum:
Empfangen der ersten Nachricht (242), deren Zeitpunkt der Sendung von der ersten Vorrichtung für die Berechnung der zeitbasierten Distanz verwendet wird, von der ersten Vorrichtung;
Senden der zweiten Nachricht (246), deren Zeitpunkt des Empfangs von der ersten Vorrichtung für die Berechnung der zeitbasierten Distanz verwendet wird, an die erste Vorrichtung in Reaktion auf die Nachricht; und
Senden einer nachfolgenden Nachricht (264), die die Authentisierungsdaten umfasst, an die erste Vorrichtung.

15. Vorrichtung nach Anspruch 14, bei der die Eingabe/Ausgabe-Einheit (218) ferner zum Empfangen einer Nachricht (452) von der ersten Vorrichtung ausgelegt ist, wobei die Nachricht Authentisierungsdaten umfasst, die von der ersten Vorrichtung berechnet werden, und bei der der Prozessor (217) ferner zum Verifizieren der empfangenen Authentisierungsdaten und zum Berechnen seiner eigenen Authentisierungsdaten nur dann, wenn die empfangenen Authentisierungsdaten erfolgreich verifiziert werden, ausgelegt ist.

## Revendications

1. Un procédé de calcul sécurisé au niveau d'un premier dispositif (212) de la distance basée sur le temps jusqu'à un deuxième dispositif (216) dans un réseau (100), comprenant les étapes suivantes :
- l'envoi d'un premier message (242) au deuxième dispositif ;
- la réception d'un deuxième message (246) du deuxième dispositif, envoyé en réponse au premier message ;
- le calcul (244 ; 248 ; 250) de la distance-temps basée sur le temps de la transmission du premier message et le temps de réception du deuxième message ;
**caractérisé par** les étapes ultérieures suivantes :
- la réception d'un message ultérieur (264) comprenant des données d'authentification liées de façon cryptographique à l'un des éléments suivants : au moins le premier message (242), au moins le deuxième message (246) et au moins le premier message (242) et le deuxième message (246) ; et
- la vérification (266) des données d'authentification.

2. Procédé de la revendication 1, comprenant en outre l'étape d'envoi d'un message (252) pour demander un message supplémentaire (264) comprenant des données d'authentification si la distance basée sur le temps calculée se situe sous une limite prédéterminée.

3. Procédé de la revendication 1 ou 2, où le premier message (242) comprend un premier élément cryptographique et le deuxième message (246) comprend un deuxième élément cryptographique, et où les données d'authentification sont calculées sur la base des premier et deuxième éléments cryptographiques.

4. Procédé de la revendication 3, où les éléments cryptographiques sont des numéros aléatoires et les données d'authentification sont un résultat d'une fonction calculée à l'aide des numéros aléatoires, la fonction étant dépendante d'un élément secret.

5. Procédé selon la revendication 3, comprenant en outre les étapes suivantes :
- l'envoi d'un quatrième message (222) au deuxième dispositif pour l'informer du lancement du procédé ;
- la génération (226) du premier élément cryptographique.

6. Procédé de la revendication 5, comprenant en outre une étape d'attente (228) pendant un temps prédéterminé afin de donner au deuxième dispositif le temps de terminer la génération du deuxième élément cryptographique.

7. Procédé de la revendication 2, où les données d'authentification sont les secondes données d'authentification, le procédé comprenant en outre l'étape de calcul (451) des premières données d'authentification, et où le message (252), envoyé au deuxième dispositif pour demander le message supplémentaire (264) comprenant les deuxièmes données d'authentification, comprend les premières données d'authentification.

8. Procédé de la revendication 1, comprenant en outre l'étape de validation du calcul de la distance basée sur le temps pour le deuxième dispositif après avoir accompli avec succès la vérification des données d'authentification.

9. Un procédé de réponse au niveau d'un deuxième dispositif (216) dans un réseau (100) à un protocole pour le calcul sécurisé au niveau d'un premier dispositif (212) de la distance basée sur le temps jusqu'au deuxième dispositif, comprenant les étapes suivantes :
- la réception, à partir du premier dispositif, d'un premier message (242) dont le temps de transmission est utilisé par le premier dispositif pour le calcul de la distance basée sur le temps ;
- l'envoi, en réponse au premier message, au premier dispositif d'un deuxième message (246) dont le temps de réception est utilisé par le premier dispositif pour le calcul de la distance basée sur le temps ;
- le calcul (262) des données d'authentification, liées de façon cryptographique à l'un des éléments suivants : au moins le premier message (242), au moins le deuxième message (246) et au moins le premier message (242) et le deuxième message (246) ; et
- l'envoi au premier dispositif d'un message ultérieur (264) comprenant les données d'authentification.

10. Un premier dispositif (212) adapté pour le calcul sécurisé de la distance basée sur le temps jusqu'à un deuxième dispositif (216) dans un réseau (100), le premier dispositif comprenant :
- une unité d'entrée/sortie (214) adaptée pour :
- envoyer un premier message (242) au deuxième dispositif ; et
- recevoir à partir du deuxième dispositif, un deuxième message (246), envoyé en réponse au premier message (242) ; et
- un processeur (213) adapté pour :
- calculer la distance-temps basée sur le temps de transmission du premier message et le temps de réception du deuxième message ;
- **caractérisé en ce que** :
- l'unité d'entrée/sortie est en outre adaptée afin de recevoir un message ultérieur (264) comprenant des données d'authentification, les données d'authentification étant liées de façon cryptographique à l'un des éléments suivants : au moins le premier message (242), au moins le deuxième message (246) et au moins le premier message (242) et le deuxième message (246) ; et
- le processeur est en outre adapté pour vérifier les données d'authentification.

11. Dispositif de la revendication 10, où l'unité d'entrée/sortie (214) est en outre adaptée pour envoyer un message (252) afin de demander des données d'authentification uniquement si la distance basée sur le temps calculée se situe sous une limite prédéterminée.

12. Dispositif de la revendication 10 ou 11, où le processeur (213) est en outre adapté pour calculer les premières données d'authentification et où l'unité d'entrée/sortie (214) est en outre adaptée pour inclure les premières données d'authentification dans le message (252) envoyé au deuxième dispositif afin de demander les données d'authentification, qui sont les deuxièmes données d'authentification.

13. Dispositif de la revendication 10, où :
- le processeur est en outre adapté pour :
- générer un premier élément cryptographique ; et
- vérifier les données d'authentification reçues, les données d'authentification étant liées de façon cryptographique en se basant sur le premier élément cryptographique et un deuxième élément cryptographique ; et
- l'unité d'entrée/sortie est en outre adaptée pour :
- inclure le premier élément cryptographique dans le premier message (242) ; et
- recevoir le deuxième élément cryptographique dans le deuxième message (246).

14. Un deuxième dispositif (216) dans un réseau (100) adapté pour répondre à un protocole, lancé au niveau d'un premier dispositif (212), pour le calcul sécurisé de la distance basée sur le temps jusqu'au deuxième dispositif, le deuxième dispositif comprenant :
- un processeur (217) adapté pour :
- calculer les données d'authentification liées de façon cryptographique à l'un des éléments suivants : au moins un premier message (242), au moins un deuxième message (246) et au moins le premier message (242) et le deuxième message (246) ; et
- une unité d'entrée/sortie (218) adaptée pour :
- recevoir, à partir du premier dispositif, le premier message (242) dont le temps de transmission est utilisé par le premier dispositif pour le calcul de la distance basée sur le temps ;
- envoyer en réponse au message, au premier dispositif, un deuxième message (246) dont le temps de réception est utilisé par le premier dispositif pour le calcul de la distance basée sur le temps ; et
- envoyer au premier dispositif un message ultérieur (264) comprenant les données d'authentification.

15. Dispositif de la revendication 14, où l'unité d'entrée/sortie (218) est en outre adaptée pour recevoir un message (452) à partir du premier dispositif, le message comprenant les données d'authentification calculées par le premier dispositif, et où le processeur (217) est en outre adapté pour vérifier les données d'authentification reçues et calculer ses propres données d'authentification uniquement si la vérification des données d'authentification reçues est terminée avec succès.
